# FASCICULE DE BREVET EUROPEEN

(11) **EP 0 496 647 B1**
(45) Date de publication et mention de la délivrance du brevet: **24.04.1996**
(21) Numéro de dépôt: 92400074.8
(22) Date de dépôt: 10.01.1992
(51) Int. Cl.: C01B 25/36, C01B 33/26, C01B 25/45

(54) **Procédé de préparation de composés aluminophosphates et dérivés substitués de type structural VFI**
Verfahren zur Herstellung von Aluminophosphatverbindungen und substituierten Derivaten von VFI-Strukturtyp
Method for preparation of aluminophosphate compounds and substituted derivatives of VFI structural type

(30) Priorité: 18.01.1991 FR 9100658
(43) Date de publication de la demande: 29.07.1992
(73) Titulaire: INSTITUT FRANCAIS DU PETROLE, F-92502 Rueil-Malmaison (FR)
(72) Inventeur: Joly, Jean-François, F-75003 Paris (FR); Cauffriez, Hervé, F-78380 Bougival (FR); Guth, Jean-Louis, F-68200 Mulhouse (FR)

(56) Documents cités:
- EP-A- 0 146 389
- WO-A-89/01912
- WO-A-89/05775
- WO-A-89/09748
- WO-A-89/09749

## Description

La présente invention concerne un nouveau procédé de préparation de composés aluminophosphates et de leurs dérivés substitués de type structural VFI.

Les tamis moléculaires (solides microporeux cristallisés) sont connus depuis de nombreuses années. En général, on distingue deux familles: 1. les zéolithes (aluminosilicates) et 2. les autres tamis moléculaires qui ne sont pas des aluminosilicates (solides "quasi-zéolithiques"). Dans la seconde catégorie de tamis moléculaires, on trouve des composés aluminophosphates cristallisés (voir US-A-4310440 par exemple). Les composés aluminophosphates cristallisés dans lesquels est incorporé du silicium et que l'on nomme alors silicoaluminophosphates peuvent présenter des capacités d'échange d'ions ainsi que des propriétés acides, ce qui rend leur utilisation possible en catalyse acide. Ces propriétés se retrouvent habituellement aussi quand l'un des éléments Co, Mg, Zn et Mn est incorporé dans la charpente des aluminophosphates.

Comme les zéolithes, la grande majorité de ces composés du type aluminophosphates cristallisés (et leurs dérivés substitués) possède un réseau microporeux dont le diamètre d'ouverture des pores est en général compris entre 2 et 7,4 angströms (7,4 angströms étant une valeur qui correspond à une ouverture des pores délimitée par un contour à 12 atomes d'oxygène). Très récemment, l'obtention de composés aluminophosphates (et dérivés substitués) caractérisés par des diamètres d'ouverture des pores supérieurs à 7,4 angströms a été rapportée. Par exemple, DESSAU et coll. décrivent dans "Zeolites, 1990, vol. 10, p.522" la structure cristallographique de l'aluminophosphate noté AIPO₄-8, cette structure étant caractérisée par un réseau poreux monodimensionnel dont l'ouverture des pores, elliptique, est de 7,9 angströms par 8,7 angströms. Cette structure est aussi caractérisée en ce que l'ouverture des pores est délimitée par un contour à 14 atomes d'oxygène.

La synthèse de composés aluminophosphates (et dérivés substitués) dont l'ouverture des pores est délimitée par un contour à 18 atomes d'oxygène, ce qui correspond à un diamètre de pores de 12 angströms environ, a été décrite dans plusieurs demandes de brevets ou brevets (WO 89/01912, WO 89/05775, WO 89/09748, WO 89/09749 et US-A-4673559).

La demande de brevet WO 89/01912 décrit la synthèse de composés aluminophosphates cristallisés microporeux capables d'adsorber des molécules ayant un diamètre cinétique compris entre 3 et 14 angströms. Ce produit est appelé VPI-5; la commission structurale de l'International Zeolite Association a choisi le terme "VFI" comme code de la struture VPI-5. La synthèse de cette VPI-5 de structure VFI est caractérisée en ce que le milieu réactionnel contient une source d'aluminium, de phosphore et d'un composé organique. Le solide VPI-5 est obtenu par chauffage du milieu réactionnel dans un autoclave à une température comprise entre 50 et 200°C, la durée de chauffage devant être comprise entre 1 et 50 heures. L'utilisation de durées de chauffage inférieures à 1 heure conduit à des produits amorphes ou incomplétement cristallisés.

La demande de brevet WO 89/05775 concerne la synthèse d'un composé cristallisé aluminophosphate présentant un diagramme de diffraction des rayons X contenant les raies principales caractérisant le type structural VFI. Le solide cristallisé est obtenu après chauffage pendant une durée pouvant atteindre 80 heures. Le milieu réactionnel contient un composé organique. De même, dans la demande de brevet WO 89/09749 est décrite la synthèse de composés aluminophosphates cristallisés présentant des diagrammes de diffraction des rayons X caractéristiques du type structural VFI et semblables à ceux des composés décrits dans la demande de brevet WO 89/09748, la synthèse étant effectuée en présence d'un agent organique du type sel d'ammonium quaternaire.

Le brevet US-A-4673559 décrit l'obtention de composés silicoaluminophosphates en milieu biphasique.

La présente invention concerne un nouveau procédé d'obtention de composés aluminophosphates et leurs dérivés substitués de type structural VFI. Ce nouveau procédé est caractérisé en ce que la vitesse de montée en température du mélange réactionnel est la plus rapide possible, c'est-à-dire supérieure à 250°C/heure et de préférence supérieure à 400°C/heure. Ainsi, la durée totale du chauffage du mélange réactionnel homogénéisé, somme du temps nécessaire pour atteindre la température de synthèse et du palier à la température de synthèse nécessaire pour obtenir un solide du type VFI très bien cristallisé, ne dépasse pas 45 minutes.

De nombreuses méthodes peuvent être utilisées pour obtenir une montée en température du milieu réactionnel la plus rapide possible. Parmi ces méthodes, on peut citer par exemple l'utilisation d'autoclaves métalliques que l'on plonge dans un bain liquide à la température désirée, l'utilisation de réacteur à flux continu ou bien l'utilisation de chauffage par micro-ondes.

L'avantage principal apporté par une montée en température du mélange réactionnel la plus rapide possible est de pouvoir obtenir dans un temps de chauffage ne dépassant pas 45 minutes des solides aluminophosphates du type structural VFI très bien cristallisés. De plus, dans ces conditions de synthèse, des agents organiques de faibles coût comme la dipropylamine peuvent être avantageusement utilisés.

Un autre avantage apporté par le procédé de synthèse des composés aluminophosphates de type VFI selon l'invention est de conduire à l'obtention de solides présentant moins de défauts de charpente que les solides de type VFI de l'art antérieur. En effet dans le spectre RMN du ³¹P du solide de type VFI obtenu selon l'invention le pic à -24 ppm n'est pas exalté par rapport aux deux autres pics présents dans le spectre. Au contraire, les spectres RMN du ³¹P des solides de type structural VFI publiés dans la littérature (voir par exemple M.E. DAVIS, C. MONTES, P. HATHAWAY, D. HASHA et J. GARCES, J. Am. Soc., 111, 3921, 1989) présentent un pic à -24 ppm exalté par rapport aux deux autres pics.

Le composé aluminophosphate de type structural VFI obtenu selon le procédé de l'invention possède :
a) la formule générale approchée suivante :

   1 Al₂O₃; 0,75-1,25 P₂O₅; 0-0,5 XO_{n/2}; 0-0,05 R ; y H₂O

   où :
   - X représente un hétéroatome choisi dans le groupe formé par le silicium, le cobalt, le magnésium et le zinc,
   - n est le degré d'oxydation de l'hétéroatome X,
   - y, le nombre de moles d'eau contenue dans ledit composé, est supérieur à 0,001,
   - R est un composé organique choisi dans le groupe formé par les amines secondaires, les amines tertiaires, les sels et hydroxydes d'ammonium quaternaires.
b) un diagramme de diffraction des rayons X représenté dans le tableau I de la description.

Le procédé de préparation des composés aluminophosphates de type structural VFI (et dérivés substitués) selon l'invention consiste en ce que :
a) On forme un mélange réactionnel comprenant de l'eau, au moins une source d'aluminium, au moins une source de phosphore, au moins une source d'un composé organique choisi dans le groupe formé par les amines secondaires, les amines tertiaires, les hydroxydes et sels d'ammonium quaternaires, éventuellement au moins une source d'un hétéroatome choisi dans le groupe formé par le silicium, le cobalt, le magnésium et le zinc, ledit mélange réactionnel ayant une composition, en termes de rapport molaire, comprise dans les intervalles de valeurs suivants :
   P₂O₅/Al₂O₃ : 0,75-1,25, de préférence 0,90-1,10
   XO_{2/n}/Al₂O₃: 0-2, de préférence 0-1,50
   R/Al₂O₃: 0,001-2, de préférence 0,80-1,20
   H₂O/Al₂O₃ : 25-100, de préférence 35-70
   D'une façon préférée, on forme le mélange réactionnel en additionnant la source d'aluminium dans la solution contenant l'eau et la source de phosphore. Le mélange ainsi obtenu est habituellement maintenu sous agitation pendant une durée comprise par exemple entre quelques minutes et 2 heures. La source d'hétéroatome X peut être ensuite ajoutée au mélange réactionnel. Le composé organique, de préférence la di-N-propylamine ou la di-N-butylamine, est alors ajouté au mélange réactionnel. Le mélange réactionnel est alors homogénéisé sous agitation pendant une durée comprise entre quelques minutes et quelques heures.
b) Le mélange réactionnel est ensuite soumis à une montée en température, dont la vitesse est supérieure à 250°C/heure, de préférence supérieure à 400°C/heure, jusqu'à une température de chauffage comprise entre 100 et 200°C, de préférence entre 125 et 160°C, puis est maintenu à cette température de chauffage jusqu'à l'obtention d'un solide cristallisé, la durée totale de chauffage (montée en température + maintien à la température de chauffage) ou durée de l'étape b) ne dépassant pas 45 minutes. Cette étape b) est avantageusement effectuée dans un autoclave métallique, le mélange réactionnel étant en contact avec les parois métalliques de l'autoclave. L'utilisation de durées totales de chauffages égales ou supérieures à 1 heure conduit notamment à l'apparition de phases non désirées.

Le solide cristallisé, séparé des eaux mères, se présente sous la forme d'aggrégats d'aiguilles de diamètre moyen de 80 à 100 microns; l'utilisation d'un tamis permet avantageusement de récupérer les cristaux en éliminant la source d'aluminium n'ayant pas réagi. Le solide est généralement lavé ensuite à l'eau distillée.

Selon un mode préféré de l'invention, les rapports molaires des constituants du mélange réactionnel sont compris dans les intervalles de valeurs suivants :
P₂O₅/Al₂O₃ : 0,90-1,10
XO_{2/n}/Al₂O₃ : 0-1,50
R/Al₂O₃ : 0,90-1,10
H₂O/Al₂O₃ : 35-50,
On peut avantageusement travailler en milieu agité lors de l'étape b).

De nombreuses sources d'aluminium et de phosphore peuvent être utilisées. Parmi les sources d'aluminium utilisées, on choisira de préférence la pseudoboehmite. Parmi les sources de phosphore utilisées, on choisira de préférence l'acide orthophosphorique.

L'identification des solides aluminophosphates (et dérivés substitués) de type structural VFI selon l'invention peut se faire de manière aisée à partir de leur diagramme de diffraction des rayons X. Ce diagramme de diffraction peut être obtenu à l'aide d'un diffractomètre en utilisant la méthode classique des poudres avec le rayonnement Kα du cuivre. Un étalon interne permet de déterminer précisemment les valeurs des angles 2θ associés aux pics de diffraction. Les distances interréticulaires dₕₖₗ, caractéristiques de l'échantillon, sont calculées à partir de la relation de Bragg. L'estimation de l'erreur de mesure Δ(dₕₖₗ) sur dₕₖₗ se calcule en fonction de l'erreur absolue Δ(2θ) affectuée à la mesure de 2θ par la relation de Bragg. En présence d'un étalon interne, cette erreur est minimisée et prise couramment égale à ± 0,05°. L'intensité relative I/Io affectée à chaque valeur de dₕₖₗ est estimée à partir de la hauteur du pic de diffraction correspondant. Cette dernière peut également être déterminée à partir d'un cliché obtenu à l'aide d'une chambre de Debye-Scherrer.

Le tableau I représente le diagramme de diffraction de rayons X caractéristiques des solides aluminophosphates (et dérivés substitués) de type structuraI VFI selon l'invention. Chaque valeur dₕₖₗ doit être affectée de l'erreur de mesure généralement comprise entre ± 0,5 et ± 0,002 suivant la valeur de 2θ (dₕₖₗ est exprimé en angström, 1 Å=10⁻¹⁰ m).

Les exemples suivants illustrent l'invention sans toutefois en limiter la portée.

**TABLEAU I**

| 2θ | dₕₖₗ | I/Io |
|---|---|---|
| 5,35 | 16,49 | 100 |
| 9.29 | 9,50 | 1 |
| 10.74 | 8,23 | 13 |
| 14,28 | 6,20 | 2 |
| 16,14 | 5,49 | 1 |
| 18,68 | 4,75 | 5 |
| 21,66 | 4,10 | 7 |
| 21,88 | 4,06 | 5 |
| 22,34 | 3,98 | 4 |
| 22,58 | 3,93 | 3 |
| 23,56 | 3,77 | 7 |
| 24,80 | 3,59 | 3 |
| 26,03 | 3,42 | 1 |
| 27,14 | 3,28 | 9 |
| 28,20 | 3,16 | 3 |
| 28,93 | 3,08 | 2 |
| 29,42 | 3,03 | 1 |
| 30,24 | 2,95 | 5 |
| 30,82 | 2,90 | 2 |
| 32,65 | 2,74 | 5 |
| 34,04 | 2,63 | 2 |
| 35,96 | 2,50 | 1 |
| 38,27 | 2,35 | 1 |

### EXEMPLE 1

A 73 g d'eau on ajoute 23 g d'acide orthophosphorique (85% H₃PO₄); 14,6 g de pseudoboehmite (catapal B Vista product) sont ensuite ajoutés à la solution. Le mélange ainsi obtenu est agité pendant 2 heures à température ambiante. 10,1 g de di-N-propylamine (DPA) sont ajoutés; on maintient l'agitation pendant 2 heures supplémentaires.

Le mélange réactionnel a, en termes de rapport molaire, la composition suivante :

1 Al₂O₃, 1 P₂O₅, 1 DPA, 45 H₂O

Le mélange réactionnel est transvasé dans un autoclave en métal. L'autoclave est immergé pendant 45 minutes dans un bain à 135°C; la vitesse de montée en température du mélange réactionnel est voisine de 600°C/heure. L'autoclave est ensuite refroidi sous courant d'eau froide. Le solide cristallisé obtenu est séparé des eaux mères par filtration sur tamis et est lavé à l'eau distillée puis séché une nuit à température ambiante.

Le solide obtenu est caractérisé par un diagramme de diffraction de rayons X identique à celui du tableau I de la présente description.

### EXEMPLE 2

23 g d'acide orthophosphorique (85% H₃PO₄) sont ajoutés à 55 g d'eau. 14,6 g de pseudoboehmite (catapal B Vista Products) sont ensuite ajoutés à la solution. Le mélange ainsi obtenu est agité 1 heure à température ambiante. 15 g de silice colloidale (ludox AS 40) sont alors ajoutés au mélange réactionnel ; on poursuit l'agitation pendant 1 heure. 10,1 g de di-N-propylamine (DPA) sont alors ajoutés; le mélange ainsi obtenu est alors maintenu sous agitation pendant 2 heures.

Le mélange réactionnel a, en termes de rapport molaire, la composition suivante :

1 Al₂O₃, 1 P₂O₅, 1 SiO₂, 1 DPA, 40 H₂O

Le mélange réactionnel est alors transvasé dans un autoclave métallique qui est immergé dans un bain à 135°C pendant 15 minutes. L'autoclave est ensuite refroidi sous courant d'eau froide.

Le solide cristallisé est séparé des eaux mères par filtration sur tamis, et est lavé à l'eau distillé puis séché une nuit à température ambiante. Il présente un diagramme de diffraction des rayons X identique à celui du tableau I de la présente description. La teneur pondérale en silicium du solide est de 5%.

### EXEMPLE 3

11,5 g d'acide orthophosphorique (85% de H₃PO₄) sont ajoutés à 32 g d'eau. 7,3 g de pseudoboehmite sont ensuite ajoutés. Le mélange ainsi obtenu est maintenu sous agitation pendant 1 heure. 7,5 g de silice colloidale (ludox AS 40) sont alors ajoutés au mélange qui est ensuite maintenu sous agitation pendant 1 heure à température ambiante. On ajoute alors 5 g de di-N-propylamine (DPA) ; le mélange réactionnel est ensuite maintenu sous agitation pendant 2 heures.

Le mélange réactionnel a, en termes de rapport molaire, la composition suivante :

1 Al₂O₃, 1 P₂O₅, 1 SiO₂, 1 DPA, 45 H₂O

Le mélange réactionnel est alors transvasé dans un autoclave métallique qui est immergé dans un bain à 135°C pendant 45 minutes. L'autoclave est ensuite refroidi sous courant d'eau froide.

Le solide cristallisé est séparé des eaux mères par filtration sur tamis, et est lavé à l'eau distillé puis séché une nuit à température ambiante. Il présente un diagramme de diffraction des rayons X identique à celui du tableau I de la présente description. La teneur pondérale en silicium du solide est de 5,5%.

## Revendications

1. Procédé de préparation d'un composé de type structural VFI possédant:
a) la formule générale approchée suivante :
1 Al₂O₃; 0,75-1,25 P₂O₅; 0-0,5 XO_{n/2}; 0-0,05 R; y H₂O
où :
- X représente un hétéroatome choisi dans le groupe formé par le silicium, le cobalt, le magnésium et le zinc,
- n est le degré d'oxydation de l'hétéroatome X,
- y, le nombre de moles d'eau contenue dans ledit composé, est supérieur à 0,001,
- R est un composé organique choisi dans le groupe formé par les amines secondaires, les amines tertiaires, les sels et hydroxydes d'ammonium quaternaires.
b) un diagramme de diffraction des rayons X représenté dans le tableau I de la description, dans lequel:
1) on forme un mélange réactionnel comprenant de l'eau, au moins une source d'aluminium, au moins une source de phosphore, au moins une source d'un composé organique choisi dans le groupe formé par les amines secondaires, les amines tertiaires, les sels et hydroxydes d'ammonium quaternaires, éventuellement au moins une source d'un hétéroatome choisi dans le groupe formé par le silicium, le cobalt, le magnésium et le zinc, ledit mélange réactionnel ayant une composition, en termes de rapport molaire, comprise dans les intervalles de valeurs suivants: P₂O₅/Al₂O₃ : 0,75-1,25
XO_{2/n}/Al₂O₃ : 0-2
R/Al₂O₃ : 0,001-2
H₂O/Al₂O₃ : 25-100,
2) le mélange réactionnel est ensuite soumis à une montée en température, dont la vitesse est supérieure à 250°C/heure, jusqu'à une température de chauffage comprise entre 100 et 200°C, puis est maintenu à cette température de chauffage jusqu'à l'obtention d'un solide cristallisé, la durée totale de chauffage ne dépassant pas 45 minutes.

2. Procédé selon la revendication 1 dans lequel, dans l'étape 1), le mélange réactionnel a une composition, en termes de rapport molaire, comprise dans les intervalles de valeurs suivants :
P₂O₅/Al₂O₃ : 0,90-1,10
XO_{2/n}/Al₂O₃ : 0-1,50
R/Al₂O₃ : 0,80-1,20
H₂O/Al₂O₃ : 35-70.

3. Procédé selon l'une des revendications 1 et 2 dans lequel, dans l'étape 2), la vitesse de montée en température est supérieure à 400°C/heure.

4. Procédé selon l'une des revendications 1 à 3 dans lequel la température de chauffage est comprise entre 125 et 160°C.

5. Procédé selon l'une des revendications 1 à 4 dans lequel l'hétéroatome est le silicium.

6. Procédé selon l'une des revendications 1 à 5 dans lequel le composé organique est la di-N-propylamine ou la di-N-butylamine.

## Claims

1. A process for the preparation of a compound of the VFI structure having:
(a) a general formula approximating to the following:
1 Al₂O₃ 0.75-1.25 P₂O₅ 0-0.5 XO_{n/2} 0-0.05 R y H₂O
where X represents a heteroatom chosen from the group consisting of silicon,
cobalt, magnesium and zinc;
n is the degree of oxidation of the heteroatom X;
y, the number of water molecules contained in the said compound, is greater than 0.001; and
R is an organic compound chosen from the group consisting of secondary amines, tertiary amines, and quaternary ammonium salts and hydroxides;
(b) an X-ray diffraction diagram as represented in Table I of the description,
in which
(1) there is formed a reaction mixture comprising water, at least one source of aluminium, at least one source of phosphorus, at least one source of an organic compound chosen from the group consisting of secondary amines, tertiary amines, and quaternary ammonium hydroxides and salts, possibly at least one source of a heteroatom selected from the group consisting of silicon, cobalt, magnesium and zinc, the said reaction mixture having a composition, in terms of molar ratio, within the intervals of the following values:
P₂O₅/Al₂O₃ : 0.75-1.25
XO_{2/n}/Al₂O₃ : 0-2
R/Al₂O₃ : 0.001-2
H₂O/Al₂O₃ : 25-100,
(2) the reaction mixture is then submitted to a temperature increase at a rate greater than 250°C/hour to a heating temperature between 100 and 200°C, and is then maintained at this heating temperature until a crystallised solid is obtained, the total duration of heating which does not exceed 45 minutes.

2. A process according to Claim 1 in which in step (1) the reaction mixture has a composition, in respect of molecular ratio, within the following ranges:
P₂O₅/Al₂O₃ : 0.90-1.10
XO_{2/n}/Al₂O₃ : 0-1.50
R/Al₂O₃ : 0.80-1.20
H₂O/Al₂O₃ : 35-70.

3. A process according to any one of Claims 1 and 2 in which in step 2) the rate of increase in temperature is greater than 400°C/hour.

4. A process according to any one of Claims 1 to 3 in which the heating temperature is between 125 and 160°C.

5. A process according to any one of Claims 1 to 4 in which the heteroatom is silicon.

6. A process according to any one of Claims 1 to 5 in which the organic compound is di-N-propylamine or di-N-butylamine.

## Patentansprüche

1. Verfahren zur Herstellung einer Verbindung vom Strukturtyp VFI, welche
a) die folgende allgemeine Überschlagsformel
1 Al₂O₃; 0,75-1,25 P₂O₅; 0-0,5 XO_{n/2}; 0-0,05 R; y H₂O
in der
- X ein Heteroatom darstellt, das aus der durch Silicium, Cobalt, Magnesium und Zink gebildeten Gruppe ausgewählt ist,
- n der Oxidationsgrad des Heteroatoms X ist,
- y, die in der Verbindung enthaltene Anzahl an holen Wasser, größer als 0,001 ist,
- R eine organische Verbindung ist, die aus der durch die sekundären Amine, die tertiären Amine, die Salze und Hydroxide von quaternärem Ammonium gebildeten Gruppe ausgewählt ist,
b) ein in der Tabelle I der Beschreibung dargestelltes Röntgenbeugungsdiagramm besitzt,
wobei
1) man ein Reaktionsgemisch erzeugt, das Wasser, wenigstens eine Aluminiumquelle, wenigstens eine Phosphorquelle, wenigstens eine Quelle für eine organische Verbindung, ausgewählt aus der durch die sekundären Amine, die tertiären Amine, die Salze und Hydroxide von quaternärem Ammonium gebildeten Gruppe, gegebenenfalls wenigstens eine Quelle für ein Heteroatom, ausgewählt aus der durch Silicium, Cobalt, Magnesium und Zink gebildeten Gruppe, umfaßt, wobei das Reaktionsgemisch, in Molverhältnis eine Zusammensetzung besitzt, die in den folgenden Werteintervallen enthalten ist:
P₂O₅/Al₂O₃ : 0,75-1,25
XO_{n/2}/Al₂O₃ : 0-2;
R/Al₂O₃ : 0,001-2
H₂O/Al₂O₃ : 25-100,
2) das Reaktionsgemisch dann einer Temperaturerhöhung unterworfen wird, deren Geschwindigkeit größer als 250°C pro Stunde ist, bis auf eine Heiztemperatur, die zwischen 100 und 200°C enthalten ist, dann bei dieser Heiztemperatur bis zum Erhalten eines kristallisierten Feststoffes beibehalten wird, wobei die Gesamtdauer des Heizens 45 Minuten nicht überschreitet.

2. Verfahren nach Anspruch 1, wobei im Schritt 1) das Reaktionsgemisch in Molverhältnis eine Zusammensetzung besitzt, die in den folgenden Werteintervallen enthalten ist:
P₂O₅/Al₂O₃ : 0,90-1,10
XO_{n/2}/Al₂O₃ : 0-1,50
R/Al₂O₃ : 0,80-1,20
H₂O/Al₂O₃ : 35-70.

3. Verfahren nach einem der Ansprüche 1 und 2, wobei im Schritt 2) die Geschwindigkeit der Temperaturerhöhung über 400°C/Stunde liegt.

4. Verfahren nach einem der Ansprüche 1 bis 3, wobei die Heiztemperatur zwischen 125 und 160°C enthalten ist.

5. Verfahren nach einem der Ansprüche 1 bis 4, wobei das Heteroatom Silicium ist.

6. Verfahren nach einem der Ansprüche 1 bis 5, worin die organische Verbindung Di-N-propylamin oder Di-N-butylamin ist.
